# EUROPÄISCHE PATENTSCHRIFT

(11) **EP 2 399 798 B1**
(45) Veröffentlichungstag und Bekanntmachung des Hinweises auf die Patenterteilung: **22.08.2012**
(21) Anmeldenummer: 10006616.6
(22) Anmeldetag: 25.06.2010
(51) Int. Cl.: B61D 17/20, B61D 17/22, B60D 5/00

(54) **Übergang zwischen zwei durch ein Gelenk miteinander verbundenen Fahrzeugen, z.B. Schienenfahrzeuge, mit einer Brücke und einem Balg**
Intercommunication between two connected vehicle, e.g. rail vehicles, comprising a bellow and a bridge
Intercirculation entre deux véhicules reliés par une articulation, notamment des véhicules ferroviaires, comprenant une paserelle et un soufflet

(43) Veröffentlichungstag der Anmeldung: 28.12.2011
(73) Patentinhaber: Hübner GmbH, D-34123 Kassel (DE)
(72) Erfinder: Jünke, Volker, 34587 Felsberg (DE); Goebels, Andre, 34134 Kassel (DE)
(74) Vertreter: Walther, Walther & Hinz GbR

(56) Entgegenhaltungen:
- EP-A1- 0 504 458
- EP-A1- 2 165 908
- WO-A1-98/00327

## Beschreibung

Die Erfindung betrifft ein Übergang zwischen zwei durch ein Gelenk miteinander verbundenen Fahrzeugen, z. B. ein Schienenfahrzeug, wobei der Übergang einen Balg und eine Übergangsbrücke umfasst, wobei der Balg durch die Übergangsbrücke abgestützt gehalten ist.

Der Übergang zwischen zwei gelenkigen miteinander verbundenen Fahrzeugen sorgt dafür, dass Passagiere beim Hinüberwechseln von einem Fahrzeugteil zum anderen Fahrzeug dies tun können, ohne Witterungseinflüssen von außen ausgesetzt zu sein. Der Balg umgibt hierbei eine sogenannte Übergangsbrücke, auf der die Passagiere zwischen den Wagenteilen wechseln.

Der Balg, sei er als Wellen- oder als Faltenbalg ausgebildet, besitzt ein erhebliches Eigengewicht. Dies gilt umso mehr dann, wenn der Balg zweiteilig ausgebildet ist. Ein zweiteilig ausgebildeter Balg zeichnet sich dadurch aus, dass jede Balghälfte mittig einen Kuppelrahmen aufweist, durch den die beiden Balghälften miteinander kuppelbar sind. Insbesondere dann, wenn ein solcher Balg zweigeteilt ist, würde ein solcher Balg zum Durchhängen neigen, Insofern sind bereits aus dem Stand der Technik verschiedene Maßnahmen bekannt, die das Durchhängen des Balges verhindern. So ist z. B. aus der DE 40 34 984 C2 ein im Bereich des Daches eines Fahrzeugteils angeordneter Galgen bekannt, an dem der Balg mittig aufgehängt ist. Bei einem aus zwei Balghälften bestehenden Balg ist es weiterhin aus der EP 0 854 813 bekannt, eine jede Balghälfte durch ein Zugseil abgespannt zu halten. Zu jeder Seite des Balges ist ein solches Zugseil vorgesehen, wobei das Zugseil an einem Ende an der Stirnseite des Wagenkastens befestigt ist, und mit seinem anderen Ende im unteren Bereich des Kuppelrahmens angeordnet ist.

Aus der nâchstliegenden EP 504 458 A1 ist ein Übergang mit einem geteilten Balg bekannt, bei dem der Balgrahmen an einer Übergangsbrücke angelenkt ist, wobei die Übergangsbrücke über ein Gelenk schwenkbeweglich mit einem Schlitten in Verbindung steht. Der Schlitten ist verschieblich in einer Tasche des Wagenkastens gelagert.

Der Stand der Technik, der jedoch überwiegend verbreitet ist, zeichnet sich dadurch aus, dass der Balg auf dem Gelenk oder der Kupplung zwischen zwei gelenkig miteinander verbundenen Fahrzeugen abstützend gelagert ist. In diesem Zusammenhang ist bekannt, die beiden Seiten eines Kuppelrahmens quer zur Längsachse des Fahrzeugs durch ein Traversenrohr zu verbinden, wobei sich der Balg insofern mit dem Traversenrohr auf der Kupplung oder auf dem Gelenk abstützt. Nachteilig bei einer Abstützung des Balges auf dem Gelenk ist, dass das Gelenk Querkräfte erfährt. Diese Querkräfte können in Abhängigkeit von der Größe des Balges und der Ausbildung des Balges, insbesondere wenn ein solcher Balg als Doppelwellenbalg ausgebildet ist, ganz erheblich sein. Dies insbesondere unter Berücksichtigung der Tatsache, dass eine Kupplung oder ein Gelenk zwar in der Lage ist, Kräfte in Längsrichtung des Gelenks aufzunehmen, also beim Bremsen und Beschleunigen eines solchen Gelenkfahrzeuges, allerdings nicht ausgelegt ist, um größere Querkräfte aufzunehmen.

Des Weiteren ist als nachteilig zu vermerken, dass der Hersteller der Kupplung nicht notwendigerweise identisch ist, mit dem Hersteller des Übergangs und hier insbesondere des Balges. Üblicherweise ist es allerdings so, dass der Balg und die Übergangsbrücke von ein und demselben Hersteller stammen. Das heißt, der Hersteller der Kupplung muss in die konstruktiven Einzelheiten bei der Konstruktion des Balges mit eingebunden werden. Zumindest müssen an der Kupplung entsprechende Maßnahmen getroffen werden, die es überhaupt erst ermöglichen, den Balg auf der Kupplung abzustützen.

Aus der EP 2 165 908 A1 ist ein Übergang bekannt, bei dem sich der Balg auf der Oberseite der Übergangsbrücke abstützt.

Die der Erfindung zugrunde liegende Aufgabe besteht demzufolge darin, bei einem Übergang der eingangs genannten Art dafür zu sorgen, dass trotz Abstützung des Balges auf der Übergangsbrücke die Übergangsbrücke nicht durchhängt.

Zur Lösung der Aufgabe wird erfindungsgemäß vorgeschlagen, dass der Balg in der Höhe der Übergangsbrücke auf die Übergangsbrücke zugerichtet mindestens einen Finger aufweist, wobei die Übergangsbrücke auf ihrer Unterseite eine Brückentraverse aufweist, die beabstandet zur Unterseite der Übergangsbrücke über zumindest einen Teil der Länge der Übergangsbrücke verläuft und wobei der mindestens eine Finger zur Abstützung des Balges auf der Brückentraverse aufliegt. Durch eine solche Brückentraverse auf der Unterseite der Übergangsbrücke, und hier insbesondere eine Gliederbrücke, wird eine zusätzliche Versteifung der Gliederbrücke bewirkt. Hierbei ist die Brückentraverse insbesondere auf der Unterseite des U-förmigen Rahmens angebracht der die Gleit- und Trittglieder der als Gliederbrücke ausgebildeten Übergangsbrücke aufnimmt. Es hat sich herausgestellt, dass die Steifigkeit der Brücke derart ist, dass selbst ein aus zwei Hälften bestehender Balg, bei dem die beiden Hälften durch zwei Kuppelrahmen miteinander verbindbar sind, die aufgrund der Gewichtskraft des Balges entstehenden Querkräfte durch die Übergangsbrücke aufgenommen werden können, insbesondere wenn diese Übergangsbrücke als Gliederbrücke ausgebildet ist.

Die Gliederbrücke kann einteilig oder auch zweiteilig ausgebildet sein. Eine zweiteilige Gliederbrücke zeichnet sich dadurch aus, dass die Gliederbrücke zwei Hälften aufweist; d. h., die Gliederbrücke ist mittig geteilt. Eine solche Gliederbrücke verfügt über Gleit- und Trittglieder, die in zwei parallel zueinander verlaufenden U-förmigen Rahmenschienen gelagert sind. Ein besonderer Vorteil der Erfindung besteht darin, dass die Lagerung des Balges völlig unabhängig von der Ausbildung der Kupplung erfolgt, mit der Folge, dass die konstruktive Schnittstelle nicht mehr durch die Kupplung verläuft.

Vorteilhafte Merkmale und Ausbildungen der Erfindung sind den Unteransprüchen zu entnehmen.

So ist nach einem Merkmal der Erfindung vorgesehen, dass der mindestens eine Finger um eine insbesondere vertikale Schwenkachse verschwenkbar am Balg angeordnet ist. Hierbei ist die Achse zur verschenkbaren Aufnahme des Fingers bei einem einteiligen Balg an dem Balgrahmen angebracht, bei einem zweiteiligen Balg an dem oder den Kuppelrahmen. Die Balgrahmen eines Balges stellen sich als umlaufende, im Querschnitt U-förmige Profile dar, wobei diese Balgrahmen der Verbindung der einzelnen Wellen und Falten eines Balges dienen.

Nach einem weiteren Merkmal der Erfindung weist die Brückentraverse im Endbereich eine Nase auf, die der Fixierung des Fingers im zusammengeschobenen Zustand des Balges bzw. der Balghälfte dient. Unter bestimmten Umständen kann es erforderlich sein, dass insbesondere ein aus zwei Hälften bestehender Balg geöffnet wird. Um die jeweilige Balghälfte im zusammengeschobenen Zustand des Balges halten zu können, dient die zuvor erwähnte Nase. Dies insofern, als der Finger, der am Kuppelrahmen befestigt ist, über die Nase hinweggeschoben wird, wobei der Kuppelrahmen dann dadurch, dass der Finger an der Nase anliegt, in der zusammengeschobenen Position verharrt.

Um das Einschwenken des Fingers in den durch die Brückentraverse gebildeten Raum zu erleichtern, weist der Finger auf seiner Unterseite eine Gleitkufe, beispielsweise aus Kunststoff, aus, mit der der Finger über die Brückentraverse gleitend in den Zwischenraum, der durch die Brückentraverse gebildet wird, eingeschwenkt wird.

Eine besonders vorteilhafte Ausführungsform zeichnet sich dadurch aus, dass jeder Kuppelrahmen einer Balghälfte einen um eine im Wesentlichen vertikale Achse verschwenkbaren Finger aufweist, der jeweils in den durch die Brückentraverse gebildeten Zwischenraum einschwenkbar ist. Die Länge der Brückentraverse ist hierbei mindestens derart zu wählen, dass diese die Länge des Fingers beim Einschwenken in den Zwischenraum, der durch die Unterseite der Gliederbrücke und die Brückentraverse gebildet wird, berücksichtigt.

Anhand der Zeichnungen wird die Erfindung nachstehend beispielhaft näher erläutert.
- Fig. 1: zeigt schematisch eine Ansicht auf den Übergang in Richtung der Längsachse des Fahrzeugs;
- Fig. 2: zeigt eine Seitenansicht gemäß Fig. 1.

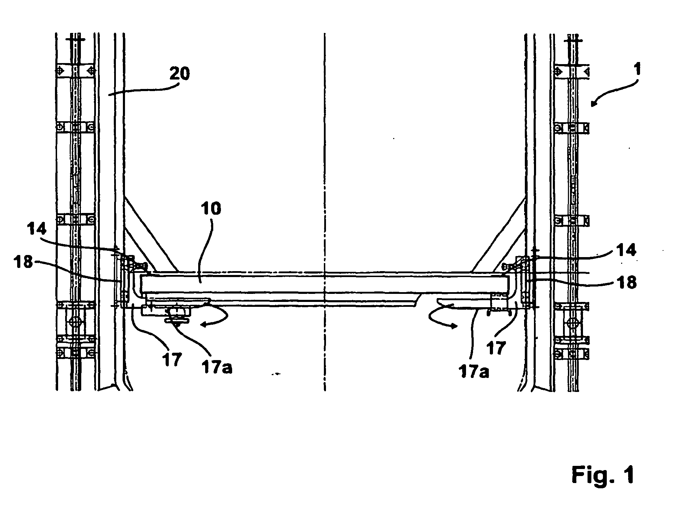

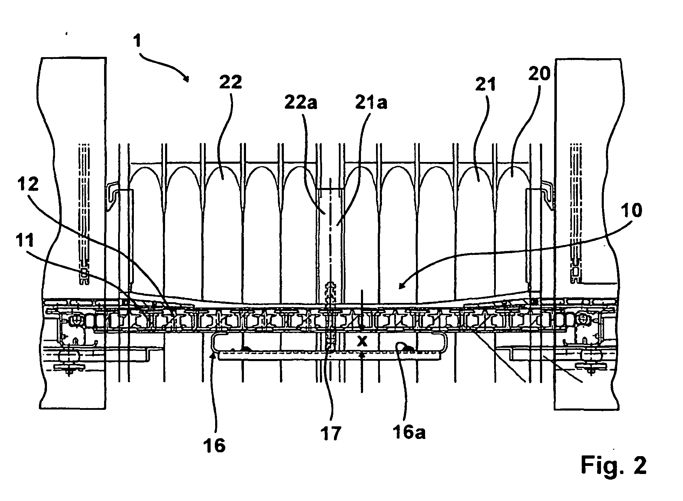

Der in den Fig. 1 und 2 mit 1 bezeichnete Übergang zeigt die Übergangsbrücke 10 und den Balg 20. Der Balg 20 umfasst zwei Balghälften 21, 22, die mittig durch jeweils einen Kuppelrahmen 21 a, 22a miteinander kuppelbar sind. Von dem Balg 20 überspannt wird die mit 10 bezeichnete Gliederbrücke, die einzelne Trittglieder 11 und Gleitglieder 12 umfasst Die einzelnen Tritt- und Gleitglieder 11, 12 sind in zwei im Querschnitt U-förmig ausgebildeten Schienen 14 gelagert (Fig. 1), wobei auf der Unterseite der U-förmigen Schienen 14 die mit 16 bezeichnete Brückentraverse angeordnet ist. Die Brückentraverse bildet einen Abstand x zur Unterseite des U-förmigen Rahmens 14. Aus der Fig. 1 sind des Weiteren die in Höhe der Übergangsbrücke 10 angeordneten Finger 17 erkennbar. Ein jeder Finger 17 ist um eine im Wesentlichen vertikale Achse 18 verschwenkbar an dem Kuppelrahmen der jeweiligen Balghälfte gelagert. Ein jeder Finger 17 weist auf seiner Unterseite eine Gleitkufe 17a auf, die beispielsweise aus einem verschleißfesten Kunststoff, z. B. Polypropylen, ausgebildet ist.

Durch Verschwenken der Finger in den Raum zwischen Brückentraverse und Unterseite der U-förmig ausgebildeten Schiene, kann sich der Balg auf der Brückentraverse über die Finger abstützen.

Auf der Brückentraverse 16 befindet sich die Nase 16a, durch die der Finger in eine Position gehalten wird, bei der die Balghälfte zusammengeschoben ist.

## Patentansprüche

1. Übergang zwischen zwei durch ein Gelenk miteinander verbundenen Fahrzeugen, z. B. ein Schienenfahrzeug, wobei der Übergang einen Balg und eine Übergangsbrücke umfasst, wobei der Balg (20) durch die Übergangsbrücke (10) abgestützt gehalten ist,
**dadurch gekennzeichnet,**
**dass** der Balg (20) in der Höhe der Übergangsbrücke (10) auf die Übergangsbrücke (10) zugerichtet mindestens einen Finger (17) aufweist, wobei die Übergangsbrücke (10) auf ihrer Unterseite eine Brückentraverse (16) aufweist, die beabstandet zur Unterseite der Übergangsbrücke (10) zumindest über einen Teil der Übergangsbrücke (10) verläuft, wobei der mindestens eine Finger (17) zur Abstützung des Balges (20) auf der Brückentraverse (16) aufliegt.

2. Übergangsbrücke nach Anspruch 1,
**dadurch gekennzeichnet,**
**dass** der mindestens eine Finger (17) an einer Schwenkachse (18) verschwenkbar am Balg (20) angeordnet ist.

3. Übergangsbrücke nach Anspruch 1,
**dadurch gekennzeichnet,**
**dass** der Balg (20) mittig in zwei Balghälften (21, 22) geteilt ist, wobei jede Balghälfte (21, 22) einen Kuppelrahmen (21 a, 22a) zur Verbindung der beiden Balghälften aufweist, wobei der mindestens eine Finger (17) an dem Kuppelrahmen (21a,22a) um eine Schwenkachse (18) schwenkbar angeordnet ist.

4. Übergangsbrücke nach Anspruch 2 oder Anspruch 3,
**dadurch gekennzeichnet,**
**dass** die Schwenkachse (18) vertikal verlaufend am Balg (20) angeordnet ist.

5. Übergangsbrücke nach Anspruch 1,
**dadurch gekennzeichnet,**
**dass** die Brückentraverse (16) im Endbereich eine Nase (16a) aufweist, die der Fixierung des Fingers (17) im zusammengeschobenen Zustand der Balghälfte (21, 22) dient.

6. Übergangsbrücke nach Anspruch 1,
**dadurch gekennzeichnet,**
**dass** jeder Kuppelrahmen (21a, 22a) einer Balghälfte (21, 22) einen an einer im Wesentlichen vertikalen Achse (18) verschwenkbar angeordneten Finger (17) aufweist, der jeweils in den durch die Brückentraverse (16) gebildeten Zwischenraum einschwenkbar ist.

7. Übergangsbrücke nach einem der vorstehenden Ansprüche,
**dadurch gekennzeichnet,**
**dass** der Finger (17) auf seiner Unterseite eine Gleitkufe (17a) aufweist.

8. Übergangsbrücke nach Anspruch 1
**dadurch gekennzeichnet,**
**dass** die Übergangsbrücke (10) als Gliederbrücke ausgebildet ist.

## Claims

1. A transition between two vehicles, for instance a rail vehicle, connected to each other by way of an articulation, the transition comprising a bellows and a transition bridge, the bellows (20) being held in a supported manner by the transition bridge (10),
**characterized in that**,
at the level of the transition bridge (10), the bellows (20) comprises at least one finger (17) aimed at the transition bridge (10), the transition bridge (10) having a bridge cross-member (16) on its underside, which runs at a distance from the underside of the transition bridge (10) along at least a part of the transition bridge (19), the at least one finger (17) resting on the bridge cross-member (16) in order to support the bellows (20).

2. The transition bridge according to claim 1,
**characterized in that**,
the at least one finger (17) is disposed on the bellows (20) so as to be pivotable about a swivel axis (18).

3. The transition bridge according to claim 1,
**characterized in that**,
the bellows (20) is centrically divided in two bellows halves (21, 22), each bellows half (21, 22) comprising a coupling frame (21 a, 22a) for connecting both bellows halves, the at least one finger (17) being disposed on the coupling frame (21 a, 22a) so as to be pivotable about a swivel axis (18).

4. The transition bridge according to claim 2 or claim 3,
**characterized in that**,
the swivel axis (18) is disposed vertically on the bellows (20).

5. The transition bridge according to claim 1,
**characterized in that**,
the bridge cross-member (16) has a catch (16) in its end region, which serves for fixing the finger (17) in the folded state of the bellows half (21, 22).

6. The transition bridge according to claim 1,
**characterized in that**,
each coupling frame (21 a, 22a) of a bellows half (21, 22) has a finger (17) pivotably disposed on a substantially vertical axis (18), said finger being respectively pivotable into the space formed by the bridge cross-member (16).

7. The transition bridge according to one of the afore-mentioned claims,
**characterized in that**,
the finger (17) comprises a skid (17a) on its underside.

8. The transition bridge according to claim 1,
**characterized in that**,
the transition bridge (10) is configured as an articulated bridge.

## Revendications

1. Intercommunication entre deux véhicules, par exemple un véhicule sur rails, reliés l'un à l'autre par une articulation, dans laquelle l'intercommunication comprend un soufflet et une passerelle d'intercommunication, le soufflet (20) étant tenu et supporté par la passerelle d'intercommunication (10),
**caractérisée en ce que**
le soufflet (20) comporte, à la hauteur de la passerelle d'intercommunication (10), au moins un doigt (17), dirigé vers la passerelle d'intercommunication (10), la passerelle d'intercommunication (10 comportant, sur sa face inférieure, une traverse de passerelle (16) qui s'étend à distance de la face inférieure de la passerelle d'intercommunication (10) au moins sur une partie de la passerelle d'intercommunication (10), l'au moins un doigt (17) s'appuyant sur la traverse de passerelle (16) pour supporter le soufflet (20).

2. Passerelle d'intercommunication selon la revendication 1,
**caractérisée en ce que**
l'au moins un doigt (17) est monté sur le soufflet (20) de façon à pouvoir pivoter autour d'un axe de pivotement (18).

3. Passerelle d'intercommunication selon la revendication 1,
**caractérisée en ce que**
le soufflet (20) est divisé en son milieu en deux demi-soufflets (21, 22), chaque demi-soufflet (21, 22) comportant un cadre d'accouplement (21 a, 22a) pour la liaison des deux demi-soufflets, l'au moins un doigt (17) étant disposé sur le cadre d'accouplement (21 a, 22a) de façon à pouvoir pivoter autour d'un axe de pivotement (18).

4. Passerelle d'intercommunication selon la revendication 2 ou la revendication 3,
**caractérisée en ce que**
l'axe de pivotement (18) est disposé sur le soufflet (20) en s'étendant verticalement.

5. Passerelle d'intercommunication selon la revendication 1,
**caractérisée en ce que**
la traverse de passerelle (16) comporte dans la région terminale un tenon (16a) qui sert à immobiliser le doigt (17) dans l'état rapproché des demi- soufflets (21, 22).

6. Passerelle d'intercommunication selon la revendication 1,
**caractérisée en ce que**
chaque cadre d'accouplement (21 a, 22a) d'un demi-soufflet (21, 22) comporte un doigt (17) disposé de façon à pouvoir pivoter sur un axe sensiblement vertical (18) et qui peut être engagé par pivotement dans l'espace intermédiaire formé par la traverse de passerelle (16).

7. Passerelle d'intercommunication selon l'une des revendications précédentes,
**caractérisée en ce que**
le doigt (17) compor te un patin de glissement (17a) sur sa face inférieure.

8. Passerelle d'intercommunication selon la revendication 1,
**caractérisée en ce que**
la passerelle d'intercommunication (10) constitue une passerelle articulée.
